# EUROPÄISCHE PATENTSCHRIFT

(11) **EP 0 758 581 B1**
(45) Veröffentlichungstag und Bekanntmachung des Hinweises auf die Patenterteilung: **24.09.2003**
(21) Anmeldenummer: 96103473.3
(22) Anmeldetag: 06.03.1996
(51) Int. Cl.: B32B 15/08

(54) **Verfahren zur Herstellung von Verkleidungselementen oder Dachscharen**
Method of production of covering elements or roof coverings
Procédé de fabrication d'éléments de couverture ou de couvertures de toit

(30) Priorität: 16.08.1995 DE 19530122
(43) Veröffentlichungstag der Anmeldung: 19.02.1997
(73) Patentinhaber: ALCAN DEUTSCHLAND GMBH, D-37075 Göttingen (DE)
(72) Erfinder: Weitsch, Hans-Eckard, 37079 Göttingen (DE); Simons, Jan-Peter, 37077 Göttingen (DE)
(74) Vertreter: Füchsle, Klaus, Dipl.-Ing.

(56) Entgegenhaltungen:
- EP-A- 0 335 642
- EP-A- 0 493 123
- DE-A- 2 609 763
- GB-A- 2 032 846
- US-A- 4 594 292
- US-A- 5 024 714
- US-A- 5 030 488

## Beschreibung

Die vorliegende Erfindung betrifft ein Verfahren zur Herstellung von schallgedämpften Verkleidungselementen, insbesondere Fassadenbekleidungen, oder profilierten Blechen zur Dacheindeckung, sogenannte Dachscharen.

Die Verwendung von Schichtwerkstoffen, die im wesentlichen aus zwei äußeren Blechlagen mit einer dazwischenliegenden viskoelastischen Kunststoffschicht bestehen, zur Herstellung von schallgedämpften Bauteilen ist grundsätzlich bekannt (vgl. DE-OS 26 09 763 sowie DE-OS 25 53 889). Hierbei wird eines der beiden Deckbleche, das auch als Dünnband bezeichnet wird, wesentlich dünner als das andere Deckblech gewählt, das auch als Trägerband bezeichnet wird. Derartige Schichtwerkstoffe können in Einzelfertigung bestimmter Blechzuschnitte oder im kontinuierlichen Durchlauf von Bandmaterial hergestellt werden (vgl. DE-OS 26 09 763).

Der aus dem Stand der Technik bekannte Schichtstoff ist jedoch über seine Fläche gesehen gleichmäßig aufgebaut, das heißt die drei Schichten dieses Schichtstoffes reichen jeweils von Schnittkante zu Schnittkante, beziehungsweise zur Außenkante des Schichtstoffs. Ein derartig aufgebauter Schichtstoff erweist sich dann als nachteilig, wenn Falzverbindungen oder Abkantungen vorgenommen werden müssen, da dann das Dünnband und die viskoelastische Kunststoffzwischenlage leicht Falten oder Beulen ausbilden, die am fertigen Produkt mechanisch wie optisch störend wirken.

Eine nur teilflächige Beschichtung des Trägerbleches mit Dünnband ist angesichts moderner Fertigungstechnologien nicht sinnvoll, da dort im Rahmen kontinuierlicher Bandfertigung die Bänder zunächst in großen Breiten bis zu 2,3 m im Durchlauf lackiert, beschichtet und laminiert und erst anschließend auf Längs- und Querteilanlagen auf die gewünschten Lieferabmessungen zugeschnitten werden.

Ein weiteres Problem entsteht aus der Art und Weise, wie derartige Schichtstoffe üblicherweise gelagert und transportiert werden. Da bei der heute am häufigsten angewendeten kontinuierlichen Bandfertigung der Schichtstoff in Coilform, das heißt als aufgewickelte Bandrolle gelagert wird, würde eine nur teilflächige Beschichtung des Schichtstoffes dazu führen, daß sich die nicht beschichteten Bereiche unter der Wickelspannung im Coil als Druckstellen auf der Sichtseite des Bandmaterials abzeichnen würden. Hinzu kämen Verwerfungen des aufgewickelten Bandes aufgrund der nicht ganzflächigen Abtragung von Wickelspannungen.

Es ist das der vorliegenden Erfindung zugrundeliegende Problem (Aufgabe), ein Verfahren zur Herstellung von Verkleidungselementen oder Dachscharen aus einem Schichtstoff zu schaffen, der gute Dämpfwirkung aufweist und gut durch Falzen und Abkanten verarbeitbar ist, wobei die eingangs genannten Probleme, die mit der Lagerung in Coilform entstehen, vermieden sein sollen.

Die Lösung dieser Aufgabe erfolgt durch ein Verfahren mit den Merkmalen des Patentanspruchs 1.

Erfindungsgemäß wird einerseits das Trägerband und andererseits das mit viskoelastischem Kunststoff beschichtete Dünnband im Coilcoating-Verfahren hergestellt und jeweils in Coilform aufgewickelt. Bei diesen aufgewickelten Coils sind keinerlei unbeschichtete Randbereiche vorgesehen, so daß die eingangs beschriebenen Nachteile nicht auftreten. Erfindungsgemäß werden sowohl Trägerband als auch Dünnband in Coilform an eine endverarbeitende Fertigungsstätte, beispielsweise eine Baustelle, geliefert und dort erst zu dem Schichtstoff zusammengefügt und gleichzeitig zu den Endprodukten weiterverarbeitet. Beim Zusammenfügen des Trägerbandes mit dem Dünnband auf der Baustelle oder in der Werkstatt bleibt zumindest ein Steifen von Dünnband frei. Dieser unbeschichtete Streifen erlaubt eine Randkantenverformung zum Zwecke einer Falznahtbildung oder einer Abkantung mit üblichen Werkzeugen, ohne daß die Gefahr von Verwerfungen oder Verbeulungen durch eine ungleichmäßige Mitverformung der Dämpfschicht besteht. Die Dämpfwirkung der Bauteile wird durch die Freisparung der Randstreifen nicht wesentlich beeinträchtigt, da die abgekanteten oder verfalzten Randstreifen nicht an den Schwingungen beteiligt sind, welche Dröhngeräusche erzeugen.

Durch das erfindungsgemäße Verfahren ist es erstmals möglich, die Komponenten des Schichtstoffes für Fassadenverkleidungen oder Dachscharen getrennt an die Baustelle oder Werkstatt anzuliefern und dort im Rahmen des Abkant- beziehungsweise Profilierungsvorganges zusammenzufügen. Hierdurch sind sämtliche Probleme beseitigt, die mit der Lagerung von nicht ganzflächig beschichteten Werkstoffen verbunden sind, was erhebliche wirtschaftliche Vorteile mit sich bringt.

Erfindungsgemäß wird gemäß den Merkmalen g) und h) des Anspruchs 1 zur Herstellung von Dachscharen das Trägerband und das Dünnband unter Einwirkung von Druck bei der Endverarbeitung derart zusammengeführt und verbunden, daß entlang der Randkanten in Richtung der Längserstreckung des Schichtstoffes zumindest ein Streifen von Dünnband freibleibt.

Im Anschluß daran durchläuft dieses durch Verkleben erzeugte Dämpfband eine Umformanlage und wird im Auslauf zu Nutzlängen abgelängt. Derartige Umformanlagen oder auch Profilieranlagen sind aus dem Stand der Technik zwar grundsätzlich bekannt (vgl. Prospekt der Fa. DRÄCO, "DAS DACH- UND WANDPROGRAMM"), jedoch sind diese bekannten Profilieranlagen lediglich zur Verformung von Blechen oder Bändern geeignet, nicht jedoch zur Verbindung von Trägerband und Dünnband unmittelbar auf der Baustelle.

Zur Herstellung von Fassadenverkleidungen kann gemäß den Merkmalen g') und h') des Anspruchs 1 zunächst das vom Coil auf der Baustelle abgewickelte Trägerband gerichtet und zu Nutzlängen abgelängt werden. Anschließend können die einzelnen Bleche mit entsprechend zugeschnittenem Dünnband über die klebfähige, viskoelastische Kunststoffschicht unter Druck verbunden werden, wobei die Abmessungen der Dünnbandzuschnitte so gewählt werden, daß später verformte Randstreifen von Dünnband frei bleiben.

Vorteilhafte Ausführungsformen der Erfindung sind durch die Unteransprüche gekennzeichnet.

So kann nach einer vorteilhaften Ausführungsform der Erfindung das Zusammenführen und feste Verbinden von Trägerband und Dünnband unmittelbar beim Einlauf in eine vorzugsweise nicht ortsfeste Profilieranlage erfolgen. Durch eine derartige Profilieranlage läßt sich der Schichtstoff unmittelbar vor dem Umformen zusammenfügen, so daß die Herstellung des Schichtstoffes und die Umformung desselben in einem einzigen Arbeitsgang auf der Baustelle erfolgen kann. Gleichzeitig ist keine separate Kaschierstation erforderlich. Diese kann jedoch gegebenenfalls vorgesehen werden.

Nach einer weiteren Ausbildung der Erfindung können ein oder mehrere Randbereiche des Schichtstoffes dadurch frei bleiben, daß das Dünnband schmaler gewählt wird als das Trägerband. Hierdurch können die freibleibenden Streifen sehr einfach realisiert werden, wobei sich für die Herstellung und spätere Verformung ein freibleibender Streifen mit einer Breite von bis zu 200 mm als vorteilhaft erwiesen hat.

Nach einer weiteren Abwandlung können ein oder mehrere in der Längsrichtung der Bänder liegende Zwischenbereiche von Dünnband frei bleiben, indem mehrere Streifen von Dünnband verwendet werden, deren Breitenmaße in der Summe geringer sind als das Breitenmaß des Trägerbandes. Durch diese Maßnahme können neben den Randbereichen auch Zwischenbereiche in Form von in der Längsrichtung der Bänder liegenden Streifen von Dünnband frei bleiben. Hierdurch wird zum einen die parallele Herstellung des Schichtstoffes in Bandform mit freibleibenden Randbereichen ermöglicht. Zum anderen sorgen freibleibende Zwischenbereiche vorteilhaft für die Möglichkeit, auch in diesen Streifen Umformungen vorzunehmen.

Da es für die Herstellung von Verkleidungselementen erforderlich sein kann, an mehr als zwei Rändern Umformungen vorzunehmen, ist nach einer weiteren Ausbildung der Erfindung vorgesehen, daß in Querrichtung der Bänder liegende Streifen von Dünnband frei bleiben, indem dieses an den entsprechenden Stellen durch Querteilung unterbrochen wird.

Das erfindungsgemäße Verfahren zur Herstellung von Verkleidungselementen oder Dachscharen wird nachfolgend beschrieben.

Zunächst wird ein Aluminiumträgerband in einer Dicke von 0,1 bis 3,0 mm im bekannten Coilcoating-Verfahren hergestellt, wobei unter dem Begriff Aluminium sowohl Reinaluminium wie jede walzbare Aluminiumlegierung verstanden wird. Bei der Herstellung wird auf der späteren Sichtseite je nach Verwendungszweck eine funktionale oder dekorative Beschichtung aufgetragen und nach Bedarf mit einer selbsthaftenden, abziehbaren Schutzfolie abgedeckt. Rückseitig wird das Trägerband im gleichen Durchlauf durch Entfettung, Chromatierung und eventuell Beschichtung mit einem Haftvermittler und/oder einem Schutzlack für die spätere Verklebung präpariert.

Ein Aluminiumdünnband in einer Dicke von 100 bis 500 µm wird (ebenfalls im Werk) im üblichen Coilcoating-Verfahren hergestellt. Hierbei kann die spätere Außenseite unbeschichtet bleiben oder wahlweise mit einem Schutzlack beschichtet werden, der zugleich der Verbesserung der Gleiteigenschaften bei späterer Verformung und Endverarbeitung dient.

Die später zu verklebende Seite des Dünnbandes wird nach einer Vorbehandlung (zum Beispiel Entfettung, Chromatierung, Primerauftrag) mit einem viskoelastischen Klebstoff beschichtet, der nach Entzug des Lösungsmittels oder nach Wasserentzug - zum Beispiel durch kurzzeitiges Erwärmen auf eine Temperatur oberhalb 100°C - mit einer handelsüblichen, wieder abziehbaren Schutzschicht abgedeckt wird. Diese Schutzschicht kann zum Beispiel siliconbeschichtetes Papier sein.

Nach der Herstellung des Trägerbandes und des Dünnbandes wird das Aluminiumträgerband und das bereits klebstoffbeschichtete Aluminiumdünnband als Vormaterial zur Weiterverarbeitung zur Verfügung gestellt, wobei die Coilbreite entsprechend den Anforderungen für das Endprodukt durch Spalten der Bänder auf Längsteilanlagen eingestellt werden kann.

Erfindungsgemäß kann nun je nach Verwendungszweck des Endproduktes das eigentliche Dämpfaluminium durch Verbinden der beiden Vormaterialien auf der Baustelle unmittelbar vor dem Aufbau auf unterschiedliche Weise fertiggestellt werden.

Zur Herstellung von Dacheindeckungen beziehungsweise Dachscharen werden Trägerband und Dünnband entweder auf einer separat vorgeschalteten Kaschierstation oder unmittelbar beim Einlauf in eine vorzugsweise nicht ortsfeste Profilieranlage zusammengeführt. Durch ein vorgesehenes Druckwalzenpaar und eine vorzugsweise leicht erhöhte Temperatur (40°C) werden Trägerband und Dünnband durch die viskoelastische Klebeschicht fest miteinander verbunden. Auf Winterbaustellen kann hierbei zur Vermeidung von Kondensationsfeuchtigkeit eine Materialvorwärmung erfolgen.

Beim Zusammenfügen von Trägerband und Dünnband läuft vorteilhafterweise das Trägerband als oberes Band in die Profilieranlage beziehungsweise die Kaschierstation ein, wobei die klebstoffbeschichtete Seite des Dünnbandes und die für die Verklebung vorbereitete Rückseite des Trägerbandes einander zugekehrt sind. Kurz vor dem Zusammenlauf der beiden Bänder wird die auf dem Dünnband befindliche Schutzschicht abgezogen und gegebenenfalls zur Wiederverwendung aufgewickelt.

Gemäß der Erfindung sind Trägerband und Dünnband in ihrer Breite so gewählt, daß die anschließend umgeformten und später verfalzten Randstreifen von Dünnband frei bleiben. Hierdurch ist gewährleistet, daß das so gefertigte Dämpfaluminium mit den üblichen Werkzeugen ohne Einstellungsänderung problemlos zur fertigen Dacheindeckung weiterverarbeitet werden kann. Das durch Verkleben erzeugte Dämpfaluminiumband durchläuft nach dem Verbindungsvorgang eine Umformanlange und wird im Auslauf zu Nutzlängen abgelängt. Das Ablängen kann alternativ jedoch auch bereits vor dem Umformer erfolgen.

Bei der Herstellung von Fassadenbekleidungselementen wurde bislang ein entsprechend vorbehandeltes und beschichtetes Aluminiumband vom Coil abgewickelt, gerichtet und zu den benötigten Längen abgelängt. Anschließend wurden die einzelnen Bleche mit speziellen Vorrichtungen zur Erzeugung des Verkleidungselementes durch Abkanten und Biegen verformt.

Erfindungsgemäß wird jedoch zur Herstellung von Fassadenbekleidungen das auf die Baustelle oder an die verarbeitende Werkstatt angelieferte und vom Coil abgewickelte Trägerband gerichtet und zunächst zu Nutzlängen abgelängt. Die einzelnen Bleche werden dann mit entsprechend zugeschnittenem Dünnband über die viskoelastische Klebeschicht unter Druck, gegebenenfalls unter gleichzeitiger Wärmeeinwirkung verbunden, wobei die Abmessungen der Dünnbandzuschnitte so gewählt sind, daß später verformte Randstreifen von Dünnband frei bleiben. Hierbei ist es auch möglich, Trägerband und Dünnband schon vor dem Ablängvorgang zu dem gewünschten Schichtwerkstoff zu verbinden, das heißt beide Bänder noch vom Coil weg zu verarbeiten. Diese Arbeitsweise bietet sich bevorzugt dann an, wenn nur die längs zur Bandlaufrichtung liegenden Randstreifen frei von Dünnband bleiben sollen. Die derartig vorbereiteten Dämpfaluminiumzuschnitte mit dünnbandfreien Randstreifen können auf herkömmliche Weise mit Standardwerkzeugen zu fertigen Verkleidungselementen verarbeitet werden.

Eine vorteilhafte Vorrichtung zur Durchführung des erfindungsgemäßen Verfahrens ist durch eine Profilieranlage gegeben, in deren Einlauf zumindest ein Druckwalzenpaar vorgesehen ist, das Dünnband und Trägerband verbindet. Hierbei ist diese Profilieranlage vorteilhafterweise transportabel, so daß diese auf den verschiedenen Baustellen eingesetzt werden kann.

Das erfindungsgemäße Verfahren ist auch anwendbar unter Verwendung von Trägerband und/oder Dünnband aus anderen walzbaren und verformbaren Metallen wie Stahl, Kupfer oder Zink.

## Patentansprüche

1. Verfahren zur Herstellung von Verkleidungselementen oder Dachscharen aus einem Schichtstoff mit zwei Metallschichten unterschiedlicher Dicke, zwischen denen eine Schicht aus schwingungsdämpfendem Kunststoff angeordnet ist, wobei die Metallschichten und der Kunststoff der Zwischenschicht zusammengeführt und unter Ausübung von Druck miteinander verbunden werden, umfassend die folgenden Schritte:
a) Herstellen eines Trägerbandes als dickere Metallschicht im Coilcoating-Verfahren;
b) Präparieren der Rückseite des Trägerbandes für die spätere Verklebung und Aufwickeln des so vorbereiteten Trägerbandes in Coilform;
c) Herstellen von Dünnband als dünnere Metallschicht im Coilcoating-Verfahren;
d) Beschichten der zu verklebenden Seite des Dünnbandes mit einem Klebstoff und Abdecken desselben mit einer wieder abziehbaren Schutzschicht;
e) Aufwickeln dieses klebstoffbeschichteten Dünnbandes in Coilform;
f) Transportieren des in Coilform aufgewickelten Trägerbandes und des in Coilform aufgewickelten Dünnbandes an eine andere endverarbeitende Fertigungsstätte, beispielsweise eine Baustelle;
g) Zusammenführen und festes Verbinden von Trägerband und Dünnband unter Einwirkung von Druck, gegebenenfalls unter gleichzeitiger Wärmeeinwirkung, derart an dieser Fertigungsstätte, daß entlang der Randkanten in Richtung der Längserstreckung des Schichtstoffes zumindest ein Streifen des Trägerbandes von Dünnband frei bleibt; und
h) anschließendes Umformen und Ablängen des Schichtstoffes zu Dachscharen;
oder
g') Richten und Ablängen des vom Coil abgewickelten Trägerbandes an dieser Fertigungsstätte zu Nutzlängen und Zusammenführen und festes Verbinden von Trägerband und Dünnband unter Einwirkung von Druck, gegebenenfalls unter gleichzeitiger Wärmeeinwirkung, wobei die Abmessungen der Dünnbandzuschnitte so gewählt werden, daß später verformte Randbereiche des Trägerbandes von Dünnband frei bleiben; und
h') anschließendes Umformen/Abkanten des Schichtstoffes zu Bekleidungselementen.

2. Verfahren nach Anspruch 1, **dadurch gekennzeichnet, daß** das Zusammenführen und feste Verbinden von Trägerband und Dünnband entweder unmittelbar beim Einlauf in eine vorzugsweise nicht ortsfeste Profilieranlage oder auf einer vorzugsweise nicht ortsfesten, separat vorgeschalteten Kaschierstation erfolgt.

3. Verfahren nach einem der vorstehenden Ansprüche, **dadurch gekennzeichnet, daß** ein oder mehrere Randbereiche des erzeugten Schichtstoffs frei bleiben, indem das Dünnband schmaler gewählt wird als das Trägerband.

4. Verfahren nach einem der vorstehenden Ansprüche, **dadurch gekennzeichnet, daß** ein oder mehrere in der Längsrichtung der Bänder liegende Zwischenbereiche von Dünnband frei bleiben, indem mehrere Streifen von Dünnband verwendet werden, deren Breitenmaße in der Summe geringer sind als das Breitenmaß des Trägerbandes.

5. Verfahren nach einem der vorstehenden Ansprüche, **dadurch gekennzeichnet, daß** in Querrichtung der Bänder liegende Streifen von Dünnband frei bleiben, indem dieses an den entsprechenden Stellen durch Querteilung unterbrochen wird.

6. Verfahren nach Anspruch 1 oder 2, **dadurch gekennzeichnet, daß** der freibleibende Streifen eine Breite von bis zu 200 mm aufweist.

7. Verfahren nach einem der vorstehenden Ansprüche, **dadurch gekennzeichnet, daß** das Trägerband eine Dicke von 0,1 bis 3,0 mm aufweist.

8. Verfahren nach einem der vorstehenden Ansprüche, **dadurch gekennzeichnet, daß** das Dünnband eine Dicke von 100 bis 500 µm aufweist.

9. Verfahren nach einem der vorstehenden Ansprüche, **dadurch gekennzeichnet, daß** das Trägerband für die Verklebung durch Entfettung und/oder Chromatierung und/oder Beschichtung mit einem Haftvermittler und/oder Schutzlack vorbereitet wird.

10. Verfahren nach einem der vorstehenden Ansprüche, **dadurch gekennzeichnet, daß** das Dünnband vor dem Aufwickeln mit Lack beschichtet wird.

11. Verfahren nach einem der vorstehenden Ansprüche, **dadurch gekennzeichnet, daß** die zu verklebende Seite des Dünnbandes durch Entfettung und/oder Chromatierung und/oder Primerauftrag vorbehandelt wird.

12. Verfahren nach einem der vorstehenden Ansprüche, **dadurch gekennzeichnet, daß** Lösungsmittel und/oder Wasser aus dem vorzugsweise viskoelastischen Klebstoff durch kurzzeitiges Erwärmen auf eine Temperatur oberhalb 100°C entfernt wird.

13. Verfahren nach einem der vorstehenden Ansprüche, **dadurch gekennzeichnet, daß** Trägerband und Dünnband auf vorzugsweise 40°C erwärmt werden, bevor sie miteinander verbunden werden.

14. Verfahren nach einem der vorstehenden Ansprüche, **dadurch gekennzeichnet, daß** die Coilbreite des Trägerbandes und/oder Dünnbandes für das Endprodukt durch Spalten der Bänder eingestellt wird.

15. Verfahren nach einem der vorstehenden Ansprüche, **dadurch gekennzeichnet, daß** beim Zusammenführen das Trägerband als oberes Band und das Dünnband als unteres Band angeordnet ist.

16. Verfahren nach zumindest einem der vorstehenden Ansprüche, **dadurch gekennzeichnet, daß** Trägerband und/oder Dünnband aus einem der folgenden Materialien bestehen: Aluminium und dessen Legierungen, Stahl, Kupfer, Zink.

## Claims

1. Process for producing lining elements or rafters from a layered material having two metal layers of different thickness, between which a layer of vibration-damping plastic is arranged, wherein the metal layers and the plastic of the intermediate layer are guided together and joined to one another while exerting pressure, comprising the following steps:
a) producing a support tape as thicker metal layer by the coil-coating process;
b) preparing the rear side of the support tape for later adhesion and winding of the support tape thus prepared in coil form;
c) producing thin tape as thinner metal layer by the coil-coating process;
d) coating the side of the thin tape to be adhered with an adhesive and covering the same with a re-peelable protective layer;
e) winding this adhesive-coated thin tape in coil form;
f) transporting the support tape wound in coil form and the thin tape wound in coil form to a different end-processing production facility, for example a building site;
g) guiding together and firm joining of support tape and thin tape under the action of pressure, optionally with simultaneous action of heat at this production facility such that at least one strip of support tape remains free of thin tape along the border edges in the direction of the longitudinal extension of the layered material; and
h) subsequent shaping and cutting-to-length of the layered material to form rafters;
or
g') straightening and cutting-to-length of the support tape unwound from the coil at this production facility to form useful lengths and guiding together and firm joining of support tape and thin tape under the action of pressure, optionally with simultaneous action of heat, wherein the dimensions of the thin tape blanks are selected so that edge regions of the support tape worked later remain free of thin tape; and
h') subsequent shaping/trimming of the layered material to form lining elements.

2. Process according to claim 1, **characterised in that** the guiding together and firm joining of support tape and thin tape takes place either immediately during entrance into a preferably non-fixed profiling plant or on a preferably non-fixed laminating station connected separately upstream.

3. Process according to one of the preceding claims, **characterised in that** one or more edge regions of the layered material produced remain free, **in that** the thin tape is selected to be narrower than the support tape.

4. Process according to one of the preceding claims, **characterised in that** one or more intermediate regions of thin tape lying in the longitudinal direction of the tapes remain free, **in that** several strips of thin tape are used, the width dimensions of which are shorter in total than the width dimension of the support tape.

5. Process according to one of the preceding claims, **characterised in that** strips of thin tape lying in transverse direction of the tapes remain free, **in that** the latter is interrupted at the corresponding points by transverse division.

6. Process according to claim 1 or 2, **characterised in that** the strip which remains free has a width of up to 200 mm.

7. Process according to one of the preceding claims, **characterised in that** the support tape has a thickness of 0.1 to 3.0 mm.

8. Process according to one of the preceding claims, **characterised in that** the thin tape has a thickness of 100 to 500 µm.

9. Process according to one of the preceding claims, **characterised in that** the support tape is prepared for adhesion by degreasing and/or chromatising and/or coating with an adhesion promoter and/or protective lacquer.

10. Process according to one of the preceding claims, **characterised in that** the thin tape is coated with lacquer before winding.

11. Process according to one of the preceding claims, **characterised in that** the side of the thin tape to be adhered is pretreated by degreasing and/or chromatising and/or primer application.

12. Process according to one of the preceding claims, **characterised in that** solvent and/or water is removed from the preferably viscoelastic adhesive by brief heating at a temperature above 100°C.

13. Process according to one of the preceding claims, **characterised in that** support tape and thin tape are heated at preferably 40°C before they are joined to one another.

14. Process according to one of the preceding claims, **characterised in that** the coil width of the support tape and/or thin tape for the end product is adjusted by splitting the tapes.

15. Process according to one of the preceding claims, **characterised in that** during guiding together, the support tape is arranged as upper tape and the thin tape as lower tape.

16. Process according to at least one of the preceding claims, **characterised in that** support tape and/or thin tape consist of one of the following materials: aluminium and alloys thereof, steel, copper, zinc.

## Revendications

1. Procédé de fabrication d'éléments de couverture ou de couvertures de toit en matériau stratifié avec deux couches métalliques d'épaisseurs différentes, entre lesquelles est disposée une couche en matière synthétique amortissant les vibrations, moyennant quoi les couches métalliques et la matière synthétique de la couche intermédiaire sont assemblées et reliées entre elles par l'exercice d'une pression, comprenant les étapes suivantes consistant à :
a) confectionner un ruban porteur sous forme de couche métallique plus épaisse selon le procédé de couchage sur bande ;
b) préparer le revers du ruban porteur pour le collage ultérieur et enroulement du ruban porteur ainsi préparé sous forme de bobine ;
c) confectionner un ruban mince sous forme de ruban métallique plus mince selon le procédé de couchage sur bande ;
d) couvrir le côté du ruban mince devant être collé avec un adhésif et revêtement de celui-ci avec une couche de protection pouvant être retirée plus tard ;
e) enrouler ce ruban mince couvert d'adhésif sous forme de bobine ;
f) transporter le ruban porteur enroulé sous forme de bobine et le ruban mince enroulé sous forme de bobine sur un autre site de fabrication pour la finition, un chantier par exemple ;
g) assembler et lier fixement le ruban porteur et le ruban mince par l'exercice d'une pression, le cas échéant par échauffement simultané, sur ce site de finition, de telle sorte que tout le long de la bordure, en direction de l'extension longitudinale du matériau stratifié, au moins une bande du ruban porteur ne soit pas recouverte par le ruban mince ;
et
h) façonner et tronçonner subséquemment le matériau stratifié pour obtenir les couvertures de toit ;
ou
g') procéder à la finition et au tronçonnage du ruban porteur déroulé de la bobine sur ce site de fabrication en longueurs utiles et assemblage et liaison fixe du ruban porteur et du ruban mince par l'exercice d'une pression, le cas échéant par échauffement simultané, moyennant quoi les dimensions des découpes du ruban mince sont choisies de telle sorte que les zones de bordure du ruban porteur façonnées ultérieurement ne soient pas recouvertes par le ruban mince ; et
h') façonner et replier subséquemment le matériau stratifié pour obtenir les éléments de couverture.

2. Procédé selon la revendication 1, **caractérisé en ce que** l'assemblage et la liaison fixe du ruban porteur et du ruban mince interviennent soit immédiatement lors de l'introduction dans une installation de profilage, de préférence non stationnaire, ou dans une station de laminage, de préférence non stationnaire, placée séparément en amont.

3. Procédé selon l'une quelconque des revendications précédentes, **caractérisé en ce qu'**une ou plusieurs zones de bordure du matériau stratifié fabriqué ne sont pas recouvertes, du fait que le ruban mince choisi est plus étroit que le ruban porteur.

4. Procédé selon l'une quelconque des revendications précédentes, **caractérisé en ce qu'**une ou plusieurs zones intermédiaires situées dans le sens de la longueur des rubans ne sont pas recouvertes par le ruban mince, du fait qu'on utilise plusieurs bandes de ruban mince dont la somme des largeurs est inférieure à la largeur du ruban porteur.

5. Procédé selon l'une quelconque des revendications précédentes, **caractérisé en ce que** les bandes transversales des rubans ne sont pas recouvertes par le ruban mince, du fait que celui-ci est interrompu aux endroits correspondants par fragmentation transversale.

6. Procédé selon l'une des revendications 1 ou 2, **caractérisé en ce que** la bande non recouverte possède une largeur pouvant atteindre 200 mm.

7. Procédé selon l'une quelconque des revendications précédentes, **caractérisé en ce que** le ruban porteur possède une épaisseur de 0,1 à 3,00 mm.

8. Procédé selon l'une quelconque des revendications précédentes, **caractérisé en ce que** le ruban mince possède une épaisseur de 100 à 500 µm.

9. Procédé selon l'une quelconque des revendications précédentes, **caractérisé en ce que** le ruban porteur est préparé au collage par dégraissage et/ou cémentage au chrome et/ou revêtement avec un agent adhésif et/ou un vernis de protection.

10. Procédé selon l'une quelconque des revendications précédentes, **caractérisé en ce que** le ruban mince est revêtu de vernis avant son enroulement.

11. Procédé selon l'une quelconque des revendications précédentes, **caractérisé en ce que** le côté du ruban mince devant être collé est préparé par dégraissage et/ou cémentage au chrome et/ou application d'une couche de fond.

12. Procédé selon l'une quelconque des revendications précédentes, **caractérisé en ce que** les produits dissolvants et/ou l'eau sont éliminés de la colle, de préférencp2e visco-élastique, par un bref réchauffement à une température dépassant 100°C.

13. Procédé selon l'une quelconque des revendications précédentes, **caractérisé en ce que** le ruban porteur et le ruban mince sont réchauffés à une température de 40°C de préférence, avant d'être reliés entre eux.

14. Procédé selon l'une quelconque des revendications précédentes, **caractérisé en ce que** la largeur de bobine du ruban porteur et/ou du ruban mince est ajustée pour le produit final par fission des rubans.

15. Procédé selon l'une quelconque des revendications précédentes, **caractérisé en ce que** lors de l'assemblage le ruban porteur est disposé en tant que ruban supérieur et le ruban mince en tant que ruban inférieur.

16. Procédé selon au moins l'une quelconque des revendications précédentes, **caractérisé en ce que** le ruban porteur et/ou le ruban mince sont composés d'un des matériaux suivants : aluminium et ses alliages, acier, cuivre, zinc.
